# EUROPEAN PATENT SPECIFICATION

(11) **EP 4 222 935 B1**
(45) Date of publication and mention of the grant of the patent: **18.11.2026**
(21) Application number: 20785730.1
(22) Date of filing: 30.09.2020
(51) Int. Cl.: H04L 43/06, H04L 41/0604, H04L 43/0876, H04W 24/08, H04L 41/40, H04L 43/20, H04W 24/04, H04L 41/0853, H04L 41/142, H04W 28/08, H04W 88/18

(54) **TECHNIQUE FOR CONTROLLING NETWORK EVENT REPORTING**
TECHNIK ZUR STEUERUNG VON NETZWERKEREIGNISBERICHTEN
TECHNIQUE DE COMMANDE DE RAPPORT D'ÉVÉNEMENTS DE RÉSEAU

(43) Date of publication of application: 09.08.2023
(73) Proprietor: Telefonaktiebolaget LM Ericsson (publ), 164 83 Stockholm (SE)
(72) Inventor: BÁDER, Attila, 2071 Paty (HU); DÉVAI, Gergely, 1212 Budapest (HU); SCHVARCZ-FEKETE, Peter, 1093 Budapest (HU); WEILER, Virag, 1165 Budapest (HU); MALA, József, 2700 Cegled (HU)
(74) Representative: Ericsson
(86) International application number: PCT/EP2020/077373
(87) International publication number: WO 2022/069033

(56) References cited:
- EP-A1- 2 523 495
- EP-A2- 2 860 910
- US-A1- 2009 069 007
- "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 11 June 2019 (2019-06-11), pages 1 - 52, XP051753950
- QUALCOMM EUROPE: "Consideration on reporting policy for MDT", 3GPP DRAFT; R2-093709, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050351943

## Description

### Technical Field

The present disclosure generally relates to wireless communication networks. In particular, a technique for controlling reporting of network events by one or more network functions, NF, of a wireless communication network is disclosed. The technique may be implemented in the form of a method, a computer program product, an apparatus, and a system.

### Background

Network management is an important feature of modern wireless communication networks. Network management decisions require a continuous collection and analysis of a plethora of network events occurring locally within the managed network and reported by the network to a network management domain. Such network events are typically reported on a subscriber level to achieve a sufficiently high resolution for network analysis.

Traditional event collection is based on passive probing of, or pre-configured event reporting by, different network functions within possibly different domains of a wireless communication network. While the volume of reported network events is already significant in wireless communication networks of the current 4^{th} Generation (4G), the event reporting volume is expected to drastically increase with the deployment of 5^{th} Generation (5G) networks (also called New Radio, NR, networks). This increase is partly due to much higher numbers of terminal devices of various kinds, including Internet of Things (IoT) devices, and partly the result of new service types that will become available in 5G networks.

As an example, it is expected that event collection by user plane probing in a 5G network will per core network site easily result in several terabit of user plane traffic that needs to be processed and evaluated in real time. A similar situation will arise in the radio access network domain as a result of the increasing numbers of devices and cells. Evidently, significant server capacities, and also a lot of electric power, will be consumed in this regard.

Attempts have been made to reduce the reported volume of network events. For example, it has been suggested to apply random event sampling techniques to reduce the amount of data that needs to be analyzed for network management purposes. However, such random sampling of network events has been found to reduce the efficiency of network anomaly detection as it cannot be ensured that, for example, problematic communication sessions are not "filtered out" in view of the applied randomness.

Document EP 2 523 495 A1 may be construed to disclose a radio terminal, which has a function to collect and report measurement information designated by a radio network, comprising: means for receiving collection/reporting control information related to the radio terminal's execution of at least one of the collection of measurement information and the reporting of the measurement information to the radio network; and control means for executing, based on the collection/reporting control information, at least one of the collection and the reporting if execution determination information, which is related to at least one of the collection of the measurement information and the reporting of the measurement information to be executed by the local terminal, satisfies a given determination criterion.

Document US 2009 / 0 069 007 A1 may be construed to disclose a telecommunication system that includes one or more radio access network controllers and one or more radio base stations. A radio access network controller supervises the operation of a radio base station. To facilitate the supervision process, the radio access network controller receives a measurement capacity report from the radio base station and determines measurement control parameters specifying reporting requirements of the radio base station. The measurement control parameters are continually adjusted so that the capacity of the radio base station is not exceeded. Also, the capacity of the radio network controller is also considered in determining the measurement control parameters.

Document EP 2 860 910 A2 may be construed to disclose a method for allocating resources to quality of service monitoring of terminal service sessions of a plurality of services in a communication network. The method comprises configuring a global quality of service resource limit defining the total resource available for monitoring the quality of service for a plurality of services in the communication network; estimating service reporting resource requirements for each of the plurality of services; allocating the available global quality of service resource limit to the plurality of services depending upon the estimated service reporting resource requirements for the plurality of services; and instructing terminals to send terminal service session reports for each of the plurality of services depending on the allocated quality of service resource for that service.

### Summary

There is a need for efficiently controlling reporting of network events in a wireless communication system.

According to the present disclosure, there are provided a method, a computer program product and an apparatus according to the independent claims. Further developments are set forth in the dependent claims.

According to a first aspect, a method of controlling reporting of network events by one or more network functions, NF, of a wireless communication network is provided. The method comprises receiving, from at least one network analytics component, a network analytics request indicative of at least one event reporting requirement of the at least one network analytics component, and receiving, from at least one NF, multiple NF reports indicative of an event reporting capability and at least one of a load and a capacity of the at least one NF. The method further comprises generating an event reporting request based on the at least one event reporting requirement and at least one of the event reporting capability, the load, and the capacity of the at least one NF, and sending the event reporting request to the at least one NF so as to control event reporting by that at least one NF. A first NF report of the multiple NF reports is indicative of the event reporting capability of that particular NF and a second NF report of the multiple NF reports is indicative of at least one of the load and the capacity of that particular NF, and the second NF report is received repeatedly after the event reporting request has been sent to the particular NF.

As understood herein, the term "multiple" generally denotes a number of two or more.

A particular NF and/or a network particular analytics component may be a software entity (e.g., implemented using cloud computing resources), a stand-alone hardware entity (e.g., in the form a network node), or a combination thereof. A particular NF may belong to a cellular wireless communication network, for example of the 4^{th} or 5^{th} Generation. A particular NF may belong to a radio access network (RAN) domain or a core network (CN) domain of the cellular wireless communication network. A particular network analytics component may belong to a network management (NM) domain of the wireless communication network.

The method may comprise receiving multiple network analytics requests that are collectively indicative of multiple event reporting requirements. The method may further comprise merging the multiple event reporting requirements into an overall event reporting requirement for the at least one NF. In this case, the event reporting request sent to the at least one NF can be based on the overall event reporting requirement. As an example, the event reporting request may include the overall event reporting requirement (e.g., as a numerical or non-numerical parameter) or a parameter derived therefrom.

The network analytics requests may be received from one and the same network analytics components or from multiple different analytics components. As such, at least two of the multiple event reporting requirements may be received from different network analytics components (potentially operated by different users within the NM domain of one network operator or by different network operators).

At least two of the multiple event reporting requirements may comprise a numerical value. In such a case, merging the multiple event reporting requirements may comprises deriving, from the (possibly different) numerical values comprised in the at least two of the multiple event reporting requirements, an overall numerical value to be comprised by the overall reporting requirement. The overall numerical value may, for example, be the least or greatest common multiple of the numerical values, a minimum or maximum of the numerical values, and so on.

Multiple NF reports are received from multiple NFs. In such a case, the event reporting request for a particular one of the multiple NFs can be individualized based on the event reporting capability and at least one of the load and the capacity of that particular NF. As an example, in case the load or capacity relates to one or more of general processing, monitoring or storage resources of a particular NF, the event reporting request may be generated such that a currently high processing load or a currently low monitoring capacity of that particular NF is not (or not significantly) worsened. This approach may result in the event reporting requirement not (or not fully) being satisfied by that particular NF.

The event reporting request may be indicative of at least one of an event sampling rate to be applied by the at least one NF, an event filter setting to be applied by the at least one NF, and one or more key performance indicators, KPIs, for which event reporting is to be performed by the at least one NF.

If the event reporting requirement is indicative of at least one KPI and an associated precision requirement, the method may comprise calculating the event sampling rate based on the precision requirement, wherein the event reporting request is indicative of at least the calculated event sampling rate and the at least one KPI. If the event reporting request is indicative of at least the event sampling rate, the method may comprise sending, to the at least one network analytics component, a message indicative of the event sampling rate or a parameter derived therefrom.

The event filter setting may be indicative of one or more of a set of (i) one or more network subscribers to be covered by NF event reporting, (ii) a wireless device class or type to be covered by NF event reporting, and (iii) a geographic area to be covered by NF event reporting. The network subscribers to be covered by NF event reporting on a subscriber level may be identified in various ways, for example by a set of one or more subscription permanent identifiers (SUPIs), a set of one or more international mobile subscriber identities (IMSIs), a set of one or more cell identifiers, a set of one or more radio session identifiers, and so on.

The NF report from the at least one NF may be indicative of an NF event reporting capability in terms of an event filter supported by the at least one NF. In such a case, generating the event reporting request for the at least one NF may comprise processing the event reporting requirement to result in an event filter setting compatible with the event filter supported by the at least one NF. The event filters may relate to identifiers used in the network. As an example, in case a given NF only supports radio session identifiers for event filtering on a subscriber level, and in case the event reporting requirement is indicative of a cell identifier or a set of SUPIs or IMSIs, the latter may be converted to radio session identifiers (as event filter settings) when generating the event reporting requirement that is to be transmitted to the NF.

If multiple NF reports are received from multiple NFs, the multiple reports may be indicative of different event filters supported by different NFs. In such scenario, generating the event reporting requests for the NFs may comprise processing the network reporting requirements to result in coherent event filter settings compatible with the different events filters supported by the different NFs. In the above example, a first NF only supporting radio session identifiers may thus receive a set of radio session identifiers, whereas a second NF only supporting SUPIs may receive a set of SUPIs that is coherent with the set of radio session identifiers (e.g., in terms of the set of subscribers to be covered).

The processing of the network reporting requirements may, for example, target at controlling event reporting by the multiple NFs such that the multiple NFs are configured to report events pertaining to a particular communication session (e.g., an end-to-end session between different user terminals or a user terminal and an application server) despite their different event filters. The correspondingly reported events may then easily be correlated in the NW domain (e.g., by the analytics components) by applying a mapping reflecting the different event filters (e.g., a mapping between different identifier types associated with the same communication session). Such a mapping may previously have been communicated to the event reporting control component to facilitate the processing the network reporting requirements to result the coherent event filter settings.

When multiple NF reports are received from a particular NF, a first NF report of the multiple NF reports is indicative of the event reporting capability of that particular NF. Moreover, a second NF report of the multiple NF reports is indicative of at least one of the load and the capacity of that particular NF. For example, when sending an NF capability request to the particular NF, the first NF report may be received responsive to the NF capability request. Sending the NF capability request may be triggered by receipt of the network analytics request. The second NF report is received repeatedly (e.g., periodically) after the event reporting request has been sent to the particular NF. The second NF report may further be indicative of current event reporting settings (e.g., a current event filter setting or a current sampling rate) of the particular NF.

The method may in some scenarios comprise receiving, from the at least one network analytics component, analytics information derived from the NF event reporting and generating a further event reporting request based on at least the analytics information. The method may further comprise sending the further event reporting request to the at least one NF so as to modify event reporting by that at least one NF. The analytics information may be indicative of at least one of (i) a network anomaly (e.g., a severely degraded service quality for a dedicated subscriber or set of subscribers), (ii) a number of events reported by a particular NF, optionally for a particular KPI, and (iii) a mapping of identifiers used in different network domains (e.g., SUPI to radio session identifier, or vice versa).

The further event reporting request may be generated also based on at least one of the event reporting capability, the load and the capacity of the at least one NF. Additionally, or as an alternative, the further event reporting request may control a modification of at least one of a currently applied event sampling rate, a currently monitored KPI set, a currently reporting set of NFs, and a currently applied event filter setting.

The one or more NFs may be implemented using cloud computing resources. In such a case, an amount of cloud computing resources allocated to a particular NF may be dependent on the event reporting request sent to that particular NF. If, for example, the requested event reporting results in an increased load or a reduced capacity of the particular NF, more cloud computing resources may be allocated by a cloud orchestrator to that particular NF.

The method can comprise determining if the network analytics request from the at least one network analytics component can be fulfilled in view of at least one of the event reporting capability, the load and the capacity of the at least one NF. The method may further comprise sending, to the at least network analytics component, a network analytics response message indicative of a result of the determination (e.g., indicative of the fact that the network analytics request cannot, or not fully, be fulfilled).

In some implementations, the method is performed by an event reporting control component having a first interface towards the at least one network analytics component and a second interface towards the at least one NF. The event reporting control component can be co-located with the at least one network analytics component in an NM domain. Optionally, the NM domain further comprises an event collection component having a third interface towards the at least one network analytics component and a fourth interface towards the at least one NF for receiving event reports from the at least one NF.

Multiple NFs may be provided in different network domains of the wireless communication network. The different network domains may comprise at least an RAN domain and a CN domain. In such a case, multiple NF reports may be received from, and multiple event reporting requests may be sent to, NFs provided in the different network domains.

According to a second aspect of the present disclosure, there is provided a computer program product comprising program code portions for performing the steps of any of the methods presented herein when the computer program product is executed by a processor or set of processors. The computer program product may be stored on a computer-readable recording medium.

According to a third aspect of the present disclosure, there is provided an apparatus for controlling reporting of network events by one or more NFs of a wireless communication network. The apparatus is configured to perform the method of the first aspect.

Still further, another apparatus for controlling reporting of network events by one or more NFs of a wireless communication network may be presented. The other apparatus may comprise a processor and a memory coupled to the processor, the memory comprising instructions executable by the processor whereby the apparatus is operative to perform a method presented herein.

Also provided may be an NM system comprising the apparatus presented herein. The NM system may further comprise the at least one network analytics component.

### Brief Description of the Drawings

Further aspects, details and advantages of the present disclosure will become apparent from the detailed description of exemplary embodiments below and from the drawings, wherein:
- Fig. 1: is a diagram illustrating a network system according to an example;
- Fig. 2: is a block diagrams illustrating an event reporting controller apparatus according to an embodiment of the present disclosure;
- Fig. 3: is a flow diagram of a method according to an embodiment the present disclosure;
- Fig. 4: is a signalling diagram illustrating a more detailed method according to an embodiment of the present disclosure;
- Figs. 5-7: are flow diagrams illustrating further methods according to an embodiment of the present disclosure;
- Fig. 8: is a flow diagram illustrating a further method according to an example;
- Fig. 9: is a schematic illustration of the available and required amount of data in different cells for analytics purposes (e.g., anomaly detection) according to an example; and
- Fig. 10: is a schematic diagram summarizing the decision basis of the event reporting control presented herein according to an example.

### Detailed Description

While, for example, some embodiments of the following description focus on an exemplary core network configuration in accordance with specific 4G and 5G specifications, the present disclosure is not limited in this regard. The present disclosure could also be implemented in other cellular or non-cellular wireless communication networks.

Those skilled in the art will further appreciate that the steps, services and functions explained herein may be implemented using individual hardware circuits, using software functioning in conjunction with a programmed microprocessor or general purpose computer, using one or more application specific integrated circuits (ASICs) and/or using one or more digital signal processors (DSP). It will also be appreciated that when the present disclosure is described in terms of a method, it may also be embodied in one or more processors and one or more memories coupled to the one or more processors, wherein the one or more memories store one or more computer programs that perform the steps, services and functions disclosed herein when executed by one or more processors.

In the following description of exemplary embodiments, the same reference numerals denote the same or similar components.

The embodiments that follow generally relate to reporting of network events, to controlling the event reporting and to analyzing the reported events. As understood herein, network events are to be construed broadly. Network events generally characterize what is happening in a communication network, such as session initiation or termination, the status of an ongoing session, transmission of a certain amount of data and so on. So called key performance indicators, or KPIs, (usually numeric) can be reported as events as such or as attributes of one or more events, such as session initiation time, ratio of unsuccessful session initiations, the amount of transmitted bytes over a given amount of time and so on. An event can be reported when it is locally detected by an NF or in response to probing. The events can be standardized (e.g., 4G or 5G) signalling events or vendor-specific events (of, e.g., a network node acting as NF). Event probing may be performed to capture the events at a network interface or to capture user plane traffic, sample it and generate user plane traffic metrics that are to be reported as one or more events. KPIs can be calculated from or attributed to one or multiple events.

As an example, a handover failure can be reported in an event. Exemplary KPIs calculated from this or these events either locally in the communication network or centrally in an NM domain are a number of handover failures or a ratio of the handover failures and the total handovers in a time period. As another example, a user plane probe may report a throughput event every 5 s in a dedicated event report. An average throughput KPI can be calculated locally or centrally as the average of these throughputs for 1 min, and a maximum throughput KPI can be calculated locally or centrally as the maximum of the reported throughputs in 1 min.

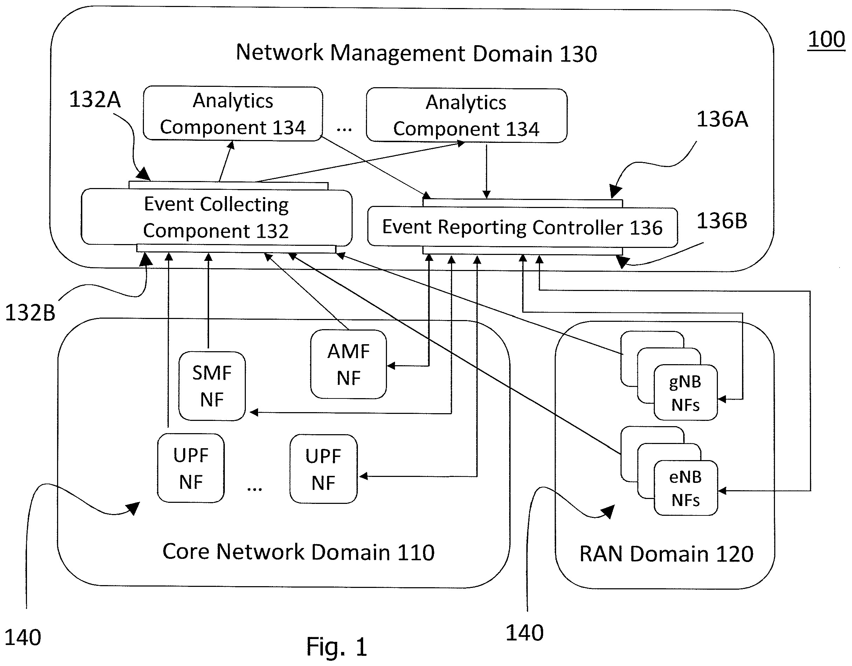

Fig. 1 illustrates an embodiment of a system 100 in which the present disclosure can be implemented. The system 100 comprises a wireless communication network with a RAN domain 110 and a CN domain 120, as generally known in the art. The system 100 further comprises an NM domain 130 configured to communicate with both the RAN domain 110 and the CN domain 120.

The CN domain 110 and the RAN domain 120 each comprises a large number of NFs 140. A particular NF 140 may be a software entity (e.g., implemented using cloud computing resources), a stand-alone hardware entity (e.g., in the form a network node), or a combination thereof. When using cloud computing resources, an amount of cloud computing resources allocated to a particular NF 140 may be dependent on the event reporting load on that particular NF. If, for example, the requested event reporting load results in an increased load or a reduced capacity of the particular NF 140, more cloud computing resources may be allocated by a cloud orchestrator to that particular NF 140. Each NF 140 comprises a bi-directional communication link to the NM domain 130 for receiving event reporting requests from the NM domain 130 and sending event reports to the NM domain 130.

The exemplary NFs 140 of Fig. 1 belong to a 5G wireless communication network as currently standardized by the 3^{rd} Generation Partnership Project (3GPP). In more detail, the CN domain 110 comprises, inter alia, multiple user plane functions (UPFs), a session management function (SMF) and an access and mobility management function (AMF). The RAN domain 120 comprises multiple base stations in the form of so-called eNodeBs (eNBs) and gNodeBs (gNBs). In some variants, the NFs 140 as presented herein may conform to the definitions of "network functions" as standardized by 3GPP in its 5G specifications, but in other variants (e.g., in 4G implementations) this may not be the case.

As illustrated in Fig. 1, the NM domain 130 comprises an event collecting component 132, a plurality of network analytics components 134 and an event reporting control component (event reporting controller hereinafter) 136. The latter is added as an extra event reporting control layer between the analytics components 134 on the one hand and the CN and RAN domains 110, 120 on the other hand.

The analytics components 134 are each configured to send network analytics requests to the event reporting controller 136 that receives these requests via a dedicated interface 136A. Moreover, the event reporting controller 136 comprises a further dedicated interface 136B towards the NFs 140 to receive NF reports from the NFs and to send event reporting requests towards the NFs. The interfaces 136A, 136B can each be configured as a software interface, a hardware interface or a combination thereof. As will be explained in greater detail below, the event reporting controller 136 may be configured to generate the event reporting requests based on information contained in the NF reports as received from the NFs 140 and based on information contained in the network analytics requests as received from the analytics components 134.

The analytics components 134 are not only configured to generate the network analytics requests for the event reporting controller 136, but also to analyse the events collected from the NFs 140 by the event collecting component 132. To this end, the event collecting component 132 has a dedicated interface 132A that provides the analytics components 134 with access to an event collection database hosted by the event collecting component 132. The event collection component 132 has a further dedicated interface 132B towards the NFs 140 to receive event reports from the NFs 140. The event collection component 132 is configured to store the events reported by the NFs 140 in its event collection database. The interfaces 136A, 136B can each be configured as a software interface, a hardware interface or a combination thereof.

The analytics components 134 may be configured as customer experience management (CEM) systems or subscriber analytics systems (such as Ericsson Experts Analytics, EEA, systems). The analytics systems 134 may be comprised by one or more of network operation centres (NOCs), service operation centres (SOC) and network optimization engineering (NOE) systems. In some implementations, the analytics systems 134 are configured to monitor and analyse service quality and network quality on a subscriber level. The analytics systems 134 may be software entities (e.g., implemented using cloud computing resources), (e.g., stand-alone) hardware entities, or combinations thereof.

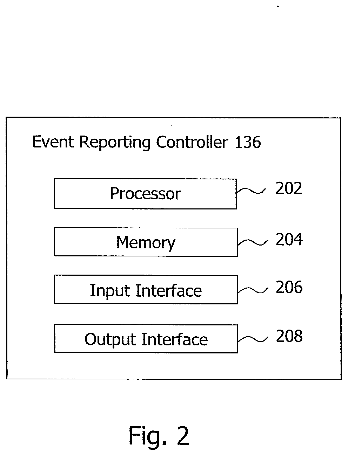

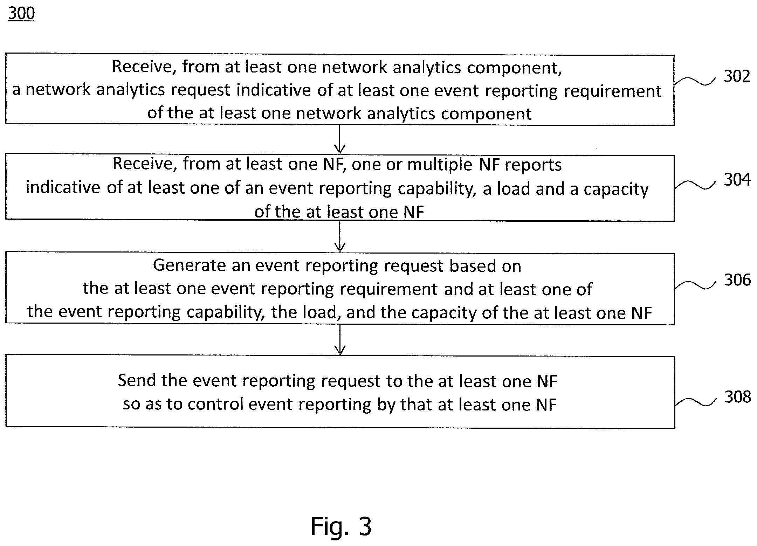

In the following, an apparatus embodiment of the event reporting controller 136 of Fig. 1 will be described with reference to Fig. 2, and general operation of the event reporting controller 136 will be described with reference to a method embodiment illustrated in flow diagram 300 of Fig. 3.

In the apparatus embodiment illustrated in Fig. 2, the event reporting controller 136 comprises a processor 202 and a memory 204 coupled to the processor 202. The memory 204 stores program code (e.g., in the form of a set of instructions) that controls operation of the processor 202 so that the event reporting controller 136 is operative to perform any of the method aspects presented herein. As understood herein, a processor, such as processor 202, may be implemented using any processing circuitry and is not limited to, for example, a single processing core but may also have a distributed topology (e.g., using cloud computing resources).

The event reporting controller 136 further comprises an input interface 206 and an output interface 208. The two interfaces 206, 208 are configured for communication with the analytics components 134 on the one hand and the NFs 140 on the other hand. The interfaces 206, 208 may be configured to implement the interfaces 136A, 136B described above with reference to Fig. 1.

Now referring to the flow diagram 300 of Fig. 3, operation of the event reporting controller 136 comprises a step 302 of receiving, from at least one of the analytics components 134, a network analytics request indicative of at least one event reporting requirement of the at least one network analytics component 134. The network analytics request will be received via the input interface 206 (when implementing the interface 136A of Fig. 1).

Operation of the event reporting controller 136 further comprises a step 304 of receiving, from at least one of the NFs 140, one or multiple NF reports indicative of at least one of an event reporting capability, a load and a capacity of the at least one NF 140. The one or more NF reports will be received via the input interface 206 (when implementing the interface 136B of Fig. 1).

Steps 302 and 304 may be performed in any order, and also concurrently. In some scenarios, receipt of the network analytics request by the event reporting controller 136 triggers sending a dedicated request by the event reporting controller 136 towards one or more of the NFs 140, which in turn triggers the one or more NFs 140 so send their NF report(s) to the event reporting controller 136.

The method further comprises, in step 306, generating, by the processor 202 of the event reporting controller 136, an event reporting request based on the at least one event reporting requirement and at least one of the event reporting capability, the load, and the capacity of the at least one NF. Still further, the method comprises, in step 308, sending the event reporting request to the at least one NF 140 so as to control event reporting by that at least one NF 140 towards the NM domain 130 (i.e., towards the event collecting component 132). The event reporting request will be sent by the event reporting controller 136 via the output interface 208 (when implementing interface 136B of Fig. 1).

The event reporting request will be indicative of one more of an event sampling rate and an event filter setting to be applied by the NF 140. Additionally, or as an alternative, the event reporting request may indicate one or more KPIs for which event reporting is to be performed by the NF 140. In some cases, the event filter setting may define a set of subscribers to be monitored for reporting purposes. In such a case, the event filter setting may comprise a white list of the subscriber to be monitored or a black list of subscribers not to be monitored. The corresponding list may be defined using SUPIs, IMSIs or any other identifier type. The list may, for example, include or exclude certain subscribers based on consent or subscription type.

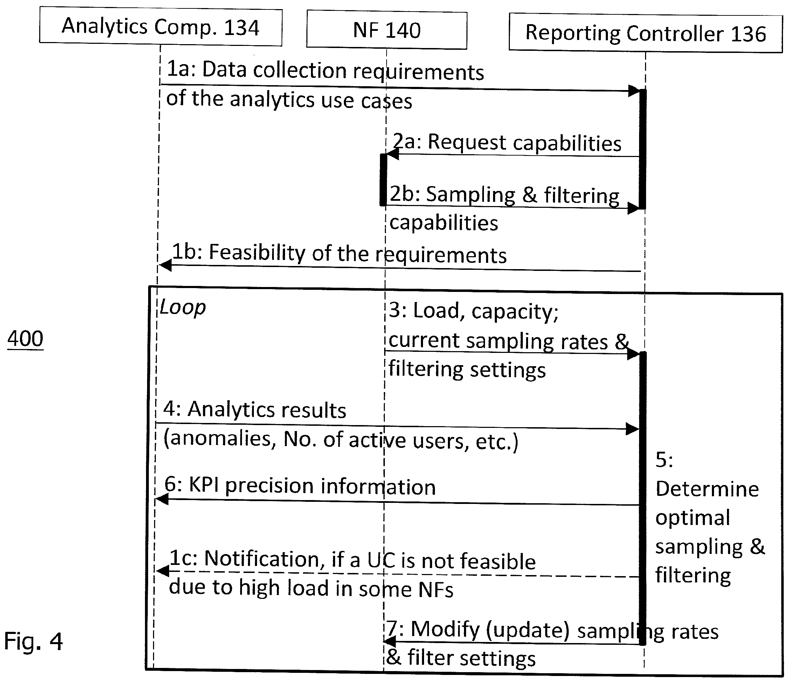

The method embodiment of Fig. 3 and co-operative operation of the event reporting controller 136, of one of the NFs 140 and of one of the network analytics components 134 will now be described in greater detail with reference to the signalling diagram 400 of Fig. 4.

In step 1a, one of the network analytics components 134 of Fig. 1 sends a network analytics request to the event reporting controller 136. The network analytics request indicative of at least one event reporting requirement of the at least one network analytics component 134. The event reporting requirement defines one or more data collection requirements of one or more analytics use cases. Such use cases (UCs) may be pre-defined, or they may be defined on a case-by-case basis by the network analytics component 134. In case of a predefined UC, the network analytics component 134 may simply request activation and, optionally, configuration of the predefined UC from the event reporting controller 136. As an example, the network analytics component 134 may send an identifier of the UC and a set of one more UC configuration parameters in step 1a.

Receipt of the network analytics request by the event reporting controller 136 (see step 302 of Fig. 2) triggers the event reporting controller 136 to send an NF capability request to one or more of the NFs 140 in step 2a of Fig. 4. In some variants, the particular NFs 140 to be contacted in this regard may be defined in the network analytics request (optionally in an abstract manner, e.g., by indication of an NF type). To this end, the event reporting controller 136 may maintain a detailed NF map for one or both of the CN domain 130 and the RAN domain 120.

In step 2b, each of the one or more NFs 140 returns a dedicate NF report indicative of the NF's 140 event reporting capability to the event reporting controller 136 (see step 304 in Fig. 3). In the present embodiment, the event reporting capability reported in the NF report is indicative of event sampling and event filtering capabilities of a particular NF 140 (e.g., in terms of one or more of supported event types, supported event sampling rates and supported event filters).

Based on the information received in the NF report(s), the event reporting controller 136 determines if the NF(s) 140 can fulfil, or support, the event reporting requirement(s) as signalled by the at least one network analytics component 134 in step 1a. The event reporting controller 136 then, in step 1b, returns a network analytics response message to the network analytics component 134. This message indicates whether or not fulfilment of the event reporting requirement(s) is feasible. As an example, support of certain UCs may be infeasible due to the required event type(s), event sampling rate(s) or event filter(s) not being supported by the required NF(s) 140.

The NF 140 may be pre-configured, or may be configured by the event reporting controller 136 in message 2a or in a dedicated configuration message, to regularly (e.g., periodically) send further NF reports indicative of one or both of the current NF processing load and the current NF event monitoring capacity to the event reporting controller 136 (see step 3 in Fig. 4). In some cases, the NF reports may additionally include information on the current event sampling rates and/or current event filter settings. Those parameters may have been generated and configured by the event reporting controller 136 earlier, for example in step 2a or between step 1b and step 3 (as explained above with reference to steps 306 und 308 in Fig. 3). As illustrated in Fig. 4, the further NF reports may be received in a continuous loop during a reporting period.

Occasionally, the network analytics component 134 may send analytics information to the event reporting controller 136, see step 4 in Fig. 4. This analytics information may, for example, have been generated by the analytics component 134 based on an analysis of the events gathered by the event collecting component 132 or otherwise. The analytics information may be indicative of a network anomaly detected by the analytics component(s) 134, a number of events reported by a particular NF 140 (e.g., for a certain KPI), location(s) of active subscriber(s), a mapping between identifiers used in different the network domains 110, 120, and so on. The analytics information may be gathered or derived from basic event metrics, network incidents, and triggers from other analytics information, for example using rule injection, subscriptions to specific data feeds, and so on.

While the loop illustrated in Fig. 4 is executed, the event reporting controller 136 continuously determines, based on the information received in one or more of steps 1a, 2b, 3 and 4, whether there is a need to modify event reporting by one or more of the NFs 140 (see step 5). If so, the event reporting controller 136 in step 7 controls one or more of the NFs 140 to set and/or update event reporting settings. This control may be NF-specific in case NF loads and capacities are taken into account.

An initial, or first, communication of the event reporting request (e.g., with, optionally default, settings of event filters and sampling rates) to the NFs 140 may have happened in step 7 upon a first iteration of the loop. During this first iteration, step 3 may report no sampling and no filters being applied (i.e., there is no data collection and associated event reporting); steps 4 and 6 may be void; and step 5 may determine default settings taking into account the requirements from step 1a and the load/capacity information from step 3. In such a scenario, step 7 may be the first communication of the settings to the NFs 140.

A later modification of reporting parameters in step 7 may include one or more of currently applied sampling rates, currently applied event filter settings, currently reporting set of NFs 140 (i.e., stopping or resuming event reporting by a particular NF 140), and currently monitored KPIs.

The event reporting controller 136 may further inform the analytics component 134 of the precision that currently is feasible for a given KPI subject to event reporting, see step 6. This KPI precision information may be derived by the event reporting controller 136 from the currently applied (or requested) event sampling rate of a given NF 140 or across a given set of NFs 140. In some variants, the analytics component 134 may have indicated, for example in step 1a, a precision requirement for a KPI (e.g., as part of a UC requirement) for which event reporting is to be performed. In such a case, the event reporting controller 136 may have calculated the required event sampling rate based on the precision requirement (with a higher precision requirement leading to a higher sampling rate). In case the event reporting controller 136 determines (e.g., from the information received in step 3 or in case of a lowering of the sampling rate in step 7) that the precision requirement, or any other UC requirement, can no longer be fulfilled, it will notify the analytics component 134 thereof in step 1c. The reason for such a notification may be that one or more of the NFs 140 have entered a state of high processing load with an associated low event monitoring capacity, that lead to an event sampling rate reduction in step 7.

Instead of, or in addition to, increasing the event sampling rate, the event filter settings may be modified to increase the event reporting precision (e.g., by extending a white list of subscribers to be monitored). Such increase(s) may be performed in case network anomalies are signalled by the analytics component 134 in step 4 to support root cause analysis in the NW domain 130. The increase(s) may specifically be performed for certain network sites (e.g., geographic areas such as cells), subscriber segments or device types affected by the network anomaly. Evidently, different sampling and filter settings may be chosen for different network sites. In some cases, the event reporting controller 136 may request the NFs 140 to perform random sampling (e.g., of randomly selected communication sessions). Optionally, the subscribers are divided into random segments (e.g., hash bins across SUPIs or IMSIs) for event reporting.

The loop illustrated in Fig. 4 permits a dynamic event reporting control. The loop may end after a pre-defined period of time. Alternatively, the analytics component 134 may inform that event reporting controller 136 that event reporting is to be stopped.

In the following, various UC and a merging of UCs will be described with reference to the exemplary scenarios of Figs. 3 and 4. Assume that a first UC (UC1) of a first analytics component (AS1) 134 requires at least 1.000 session records (or all, if total is less) from each NF 140 of a particular NF type to be reported (as indicated in step 1a). Assume further that three distinct NF load profiles are defined within each of the CN domain 110 and the RAN domain 120 (constant heavy-load, constant low-load, normal daily profile), and that the NF type of interest only supports IMSI filtering and sampling.

Based on the prevailing load information received in step 2b or step 3, the NFs 140 will get different sampling requests from the event reporting controller 136: heavily-loaded: 1% sampling, low-loaded: 100% sampling, and normal profile: sampling based on current load. As explained above, the load (step 3) and reported event record count (step 4) will be constantly monitored by the event reporting controller 136 and will be used to correct the filter configuration and an associated reporting (step 1c) in case UC1 requirements are not met. With current solutions, this correction needs to be done manually, resulting in high operational costs of the NM domain 130.

In case the event reporting controller 136 receives multiple network analytics requests in step 1a (from one multiple analytics components 134), the multiple event reporting requirements received therewith may be merged to an overall event reporting requirement, possibly per NF 140, that is then communicated to the one or more NFs 140.

Using the previous example, AS1 would like to add a new use case (UC2) similar to UC1, but which requires at least 10% sampling on all NFs 140. The event reporting controller 136 will merge the requirements of UC1 and UC2 as follows. On low-loaded NFs 140, it will keep the 100% sampling rate, on heavily-loaded NFs 140, it will raise the rate from 1% to 10%, and on standard daily profile nodes, it will set the rate to 10%, if it is more than 1000 record, or a percentage higher than 10, to satisfy both UCs.

Using the previous examples, a second analytics component 134 (AS2) may have been added to the NM domain 130, which adds a third use-case (UC3) which requires 5% of subscribers to monitored. The event reporting controller 136 will attempt to merge the three UCs, and it will determine that requirements of UC3 have been already met by UC2, so adding this new UC3 will not raise the load on the NFs 140. With current solutions, this step needs to be done manually, or needs to be automated in an integration step during AS deployment, which is quite inflexible.

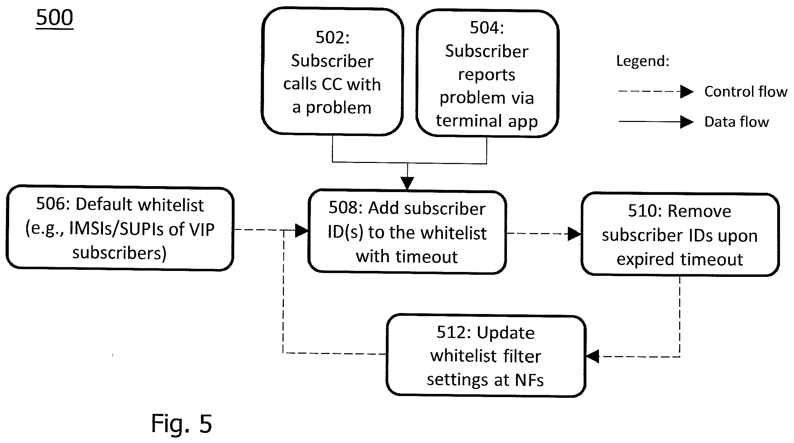

In the following, several further exemplary UCs will be discussed with reference to the diagrams of Figs. 5 to 9.

Fig. 5 illustrates a UC 500 with the title "VIP Customer Care Monitoring". Monitoring VIP subscribers is a frequent requirement. In order to support this requirement, IMSI or SUPI whitelist filtering is needed in NFs 140. If an NF 140 does not support such a filter setting, event reporting should be activated for all subscribers.

Customer Care (CC) UCs in general require monitoring event for all subscribers because any subscribers can call a CC agent and can complain about service quality, for example (see steps 502 and 504 in Fig. 5). The CC agent should be able to see service quality of the previous calls/sessions of the given subscriber in the CC display application. However, operators may use consent-based CC, and only those subscribers are monitored who gave their consent in advance to monitoring and storing their data. Consent can be given through a contract, an offline application, over the telephone (step 502) or via a terminal problem reporting application (step 504). In this case these subscribers are added to the IMSI or SUPI default white list filtering in the NFs 140 by the event reporting controller 136 (see steps 506 and 508).

In this UC, event reporting controller 136 receives the IMSI white list dynamically as requirement from the analytics component 134. Since the requirement for this UC is support of IMSI filtering, it is checked by the event reporting controller 136 if a given NF 140 supports IMSI white list filtering and its associated limit (e.g., of the number or the supported IMSIs, or size of the white list). Also, the capacity for adding additional IMSIs to the IMSI white list at the NFs 140 is checked. Some NFs 140 may not support IMSI filtering or use IMSI as whitelist identifier. In this case, the event reporting controller 136 requests the particular analytics component 134 that signaled the UC to provide a mapping to a supported identifier (e.g., IMSI to user equipment, UE, Internet protocol, IP, address, or IMSI to used access point name, APN, or network slice). The required white list is continually updated with the IMSIs (or other identifiers) of the VIP CC subscribers. No KPI precision information is sent in this UC, but it may indicate subscribers which cannot be monitored for some reason (e.g. not enough monitoring capacity at an NF140). The refreshed white list is sent and updated at the NFs 140, and after that the NFs 140 produce and report events for the updated list of subscribers (steps 510, 512).

In regard to steps 510 and 512, timeout values may be used as system configuration parameters for updating or modifying the whitelist. As an example, dedicated (e.g., VIP) subscribers need not be removed from the whitelist, therefore a timeout value for their SUPIs can be set to infinity (or no timeout is applied). SUPIs of other subscribers that are added to the whitelist due to some detected or signalled problem get a suitable timeout value (e.g., 7 days) during which their SUPIs remain on the list (and get removed when the timeout expires). The timeout value may be selected such that the root cause of a network issue can likely be determined using the event data collected during that time period in the NM domain 130. Using the timeout feature helps to keep the whitelist at a manageable size.

By filtering the events right in the NFs 140 instead of doing it in the analytics components 134 after collecting them for all subscribers saves considerable hardware resources, because data collection (e.g., probing) usually consumes 30-50% of the resources of the analytics components 134. The event reporting controller 136 has access to analytics information such as correlated event records (e.g., via the analytics components 134) and it therefore can instruct NFs 140 of different domains 110, 120 to monitor the same user sessions, even if these are identified by different IDs in the different domains. The solution is integrated into the event reporting control layer and automates otherwise manual processes of merging requirements, administering timeouts, translating the desired whitelist for different types of NFs 140, and so on.

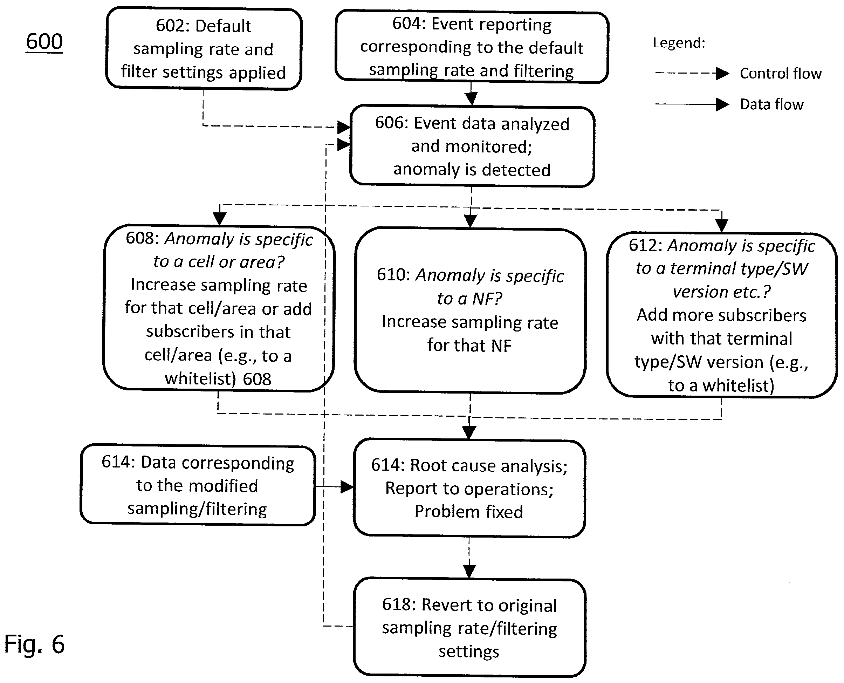

Fig. 6 illustrates a further UC 600 for activating more events to be reported in case of network anomalies. The analytics components 134 can report specific alarms, incidents or other failure cases as network anomalies (i.e., analytics information) to the event reporting controller 136 and request more events (i.e., data) related to these network anomalies in order to identify the root cause, identify further similar issues, and so on. For example, in case of a service quality incident, due to radio issues, radio events of all sessions may need to be collected in the same cell and events for these sessions may be activated in another domain by IMSI or SUPI whitelist filtering.

As another example, an incompatibility issue or high failure ratio may be detected for a new terminal type or new software version of an NF 140. In order to detect all related issues, all sessions using the same terminal types are activated in the corresponding NFs 140. This requires IMSI or SUPI whitelist filtering or international mobile equipment identity (IMEI) filtering in the NFs 140, if supported.

In Fig. 6, default reporting settings are applied by the NFs 140 and corresponding event data is constantly reported (steps 602 and 604). An analytics component 134 continuously runs anomaly detection algorithms and, upon detection of a network anomaly in step 606, indicates to the event reporting controller 136 the dimensions (NF(s) 140, terminal type)s), subscription type(s), cell(s), etc.) for which it requires more event data for root cause analysis, see steps 608, 610, 612. To this end, the event types and filtering/sampling capabilities of the NFs 140 are obtained in relation to the indicated dimensions by the event reporting controller 136. Then, it is checked if there is capacity at the NFs 140 for the requested increased event load if needed. Anomalies can be detected in analytics data already from "low percentage" sampling, but proper root cause analysis needs more reliable input data. The event reporting controller 136 may need additional info from the analytics components 134 depending on the type of anomaly (e.g., list of subscribers affected by the same issue, list of affected NFs 140, etc.) so as to trigger the reporting of more event data.

The number of events required for root cause analysis from the same cell/device type/NF 140 etc. are determined (e.g., by the analytics components 134 or the event reporting controller 136). In case of an NF issue, the simplest method is that reporting of all events is activated at the affected NFs 140. If there is not enough monitoring/reporting capacity, the sampling rate for a target precision is determined (see next section). In case of a subscriber or terminal issue, the affected subscribers are added to the white list of the affected NFs 140. The increased precision of the requested KPIs can indicated to the analytics components (see step 6 in Fig. 4). The increased event sampling rate or updated white list are configured in the corresponding NFs 140 (see again steps 608, 610, 612). Then, event data is reported for the modified settings (step 614) and used for root cause analysis (step 616). Once the problem has been fixed, one may revert to the default settings (step 618).

For example, during normal operation (there is no particular issue) the analytics components 134 require 10% random sampling at each NF 140. This is a relatively low load in terms of monitoring, reporting and processing/analysis compared to 100%. In case an anomaly is detected, e.g., related to a particular network node, terminal type, or other network dimension, more events are needed that are related to the issue in order to identify the affected subscribers s and investigate the root cause. Turning on 100% event collection would be too heavy; therefore, full event reporting is only activated only those entities which are related to affected subscribers. Assume that an NF 140 in the form of an IP multimedia sub-system (IMS) node has failed. In IMS, all events related to this node are activated for reporting (filtering for IMS node IP address). In the CN domain 110, the IMS node IP address is not a valid filtering type, therefore, the analytics component 134 or the event reporting controller 136 identifies which subscribers use the problematic IMS node and control filtering for the associated SUPIs or IMSIs (or other subscriber identifiers), using white list filtering. This white list is optionally merged with the white list determined in the currently running UCs, and data collection is activated for this merged list. In the CN domain, event reporting is done for 10% random sampling and the merged IMSI white list. In this manner coherent event filter settings can be achieved across the CN and RAN domains 110, 120.

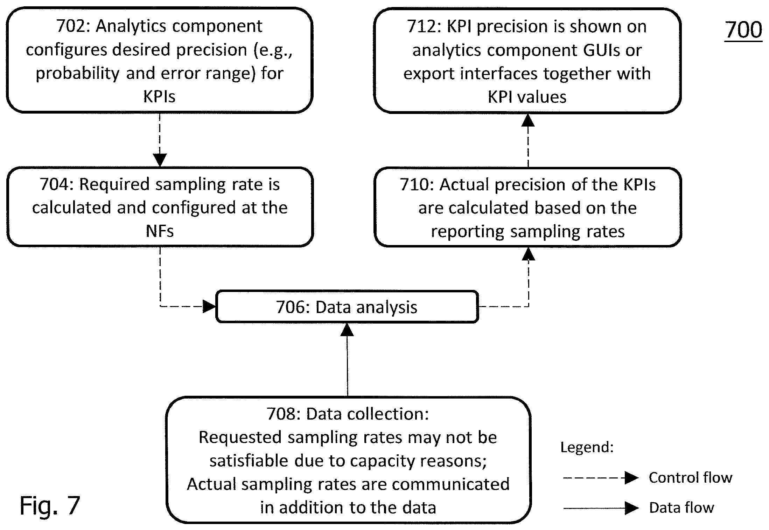

Fig. 7 illustrates a still further UC 700 for determining a required event/sampling rate in view of a requested KPI precision. KPIs are calculated from statistical samples. The accuracy of a calculated KPI mean value is determined by the statistical fluctuation of the samples. The fluctuation of data is characterized by the standard deviation of the samples. The accuracy of the KPI calculation is associated to a confidence level, which is usually selected to be 90% or 95% for network analytics applications. For each KPI, the minimum required samples for achieving a certain precision at the required confidence level can be determined as follows. The distribution of KPIs can be normal or of any other known or unknown distribution type (see, e.g., a typical distribution of the measured reference signal received power, RSRP, one of the most important radio KPIs, for a cell). When the distribution of the KPI is not normal, using the Central Limit Theorem, the mean of a nonstandard distribution is following a normal distribution, therefore for the statistics of calculating the mean selecting random samples is normal. Thus, one can apply the following formula which determines the number of samples required to obtain the mean value with a certain precision and confidence level: $N = 4 {Z}^{2} {σ}^{2} / {W}^{2} ,$ where Z is the Z score at the desired confidence level, e.g. 95%, σ is the standard deviation of the given KPI, and W is the width of the confidence interval the mean value should fell in (with 95%). Note that from this formula, the precision of the KPI W can be determined for a given number of samples and a giaven confidnece level (e.g., if there are not enough sample and one would like to determine how it affects the KPI precision).

Referring to Fig. 7, the analytics component 134 in step 702 defines the target precision (confidence interval and confidence level) for different KPIs that are to be monitored and reported. The analytics component 134 informs the event reporting controller 136 accordingly, and the latter calculates the associated event sampling rate and configures the NFs 140 accordingly. The NFs 140 will provide corresponding event reports to the NM domain 130 for analyis (step 706).

Filtering and sampling capacities of different NFs 140 may not be sufficient to guarantee enought event data for an analysis with the required KPI prevision. In this context, the event reporting controller 136 continuously received NF reports with the current NF loads and NF capacities of the involved NFs 140. as event sources of the KPIs (step 708). The analytics component 134 may further provide information to the event reporting controller 136 on the number of active subscribers, which is the basis to determine the proper sampling rates and/or whitelists as well as to calculate the achieved precision for the already collected data. The number of required samples are determined for each NF 140. The required sampling and filtering settings are configured at the NFs 140. KPI precision at the current filter setting and/or sampling rate is calculated and reported by the event reporting controller 136 (step 710) to the analytics component 134 where this information can be displayed in addition to the KPI values (step 712). It also can be used in the presentation layer for determining the lowest resolution of the KPI presentation (e.g., 1 min, 5 min, 1h)

In summary, KPI precision is an important extra information to be attached to the user output of the analytics systems, if any type of partial data collection (sampling and/or whitelist filtering) is used. The event reporting controller 136 may provide two services in this regard: (1) calculating the KPI precision from actual sampling/filtering settings and (2) calculating the required number of data points (to be realized by sampling and/or filtering) to reach a target precision.

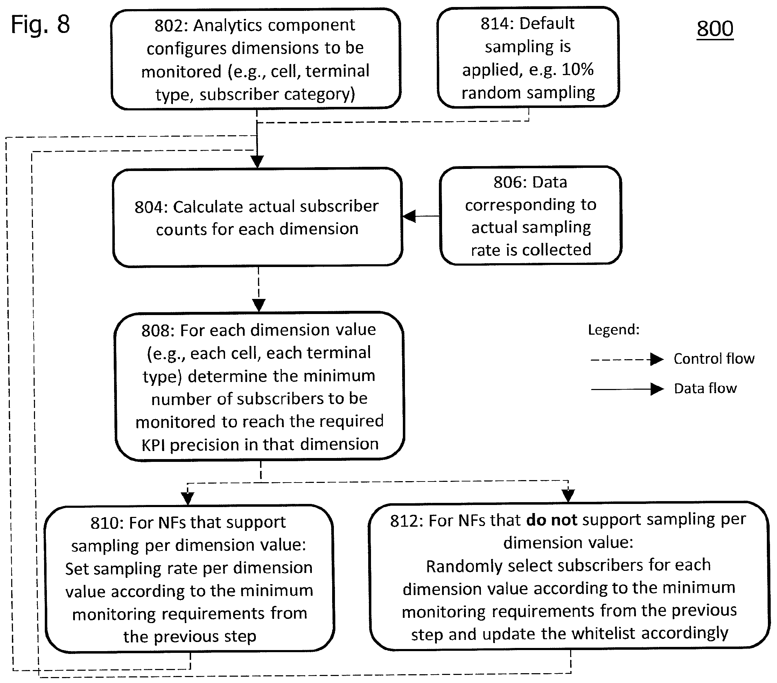

Fig. 8 illustrates a still further UC 800 for representative sampling. Many analytics use cases require KPIs for one or more dedicated dimensions, such as cell, terminal, node instance. For example, service quality per cell is an important indicator to identify underperforming cells. Radio KPIs for the same cell is important information for identifying the root cause of the service quality issues.

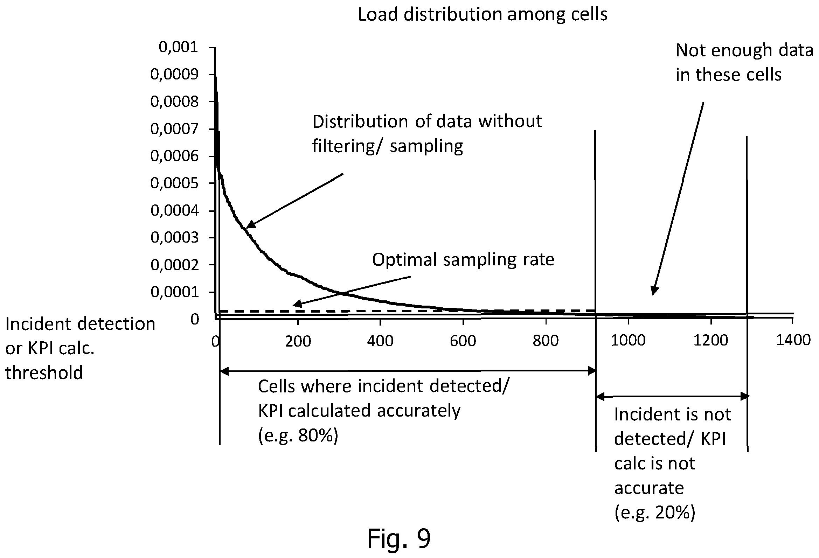

In this regard, load distribution among cells is very uneven, as it can be seen in Fig. 9. A required KPI accuracy or incident detection necessitates a certain amount of event data per cell. This amount of data is available in 80% of cells in the above example. The rest of the cells does not have enough data, so here the KPI cannot be calculated accurately, or more aggregation time is needed until the required number of samples are available. In the rest of the cells, however there are much more data than needed. The optimum sampling rate would be the one indicated by the dashed line in Fig. 9. For radio data this random sampling rate can be applied by radio base station (RBS) NFs 140, which significantly reduces the event rate from these cells in case of, e.g., a radio optimization UC.

In the user plane NFs 140 in the CN domain 110, however, there is no information on which data flow belongs to which cell. Therefore, random sampling cannot be applied. In this case, the event reporting controller 136 requests the required number of the active subscriber (e.g., IMSIs or SUPIs) per cell from the analytics component 134 and configures the corresponding number white IMSI or SUPI list or otherwise at the user plane (UP) NFs 140 in the CN domain 110. In this way, the required number of samples is obtained for UP traffic as well as per cell, and the data collection of UP is balanced per cell. Radio event data can be obtained for the same IMSI or SUPI list as well at the radio cell ensuring that the radio data are available for the same session as UP in the correlated event data records in the NM domain 130. In this regard, it is proposed to use representative sampling as follows: collect a higher fraction of data points from small subscriber groups and lower fraction from large groups. The groups can be formed via any dimension of interest, such as location, terminal type, or user category.

With respect to Fig. 8, the analytics component 134 defines target precision of different KPIs for different dimensions. Input is needed to find viable filtering/sampling settings. Load and/or capacity information from NFs 140 is needed to identify if there is any limit for data collection at the network side. Also required is information on the number of active subscribers in different dimensions (location, NF, terminal type etc.).

In step 802, the analytics component 134 determines the event dimensions to be configured as requirements vis-à-vis the event reporting controller 136, optionally together with the associated KPI precision requirements. Also, the actual counts per dimension are calculated based on the event data collected at the actual (i.e., current) sampling rate, see steps 804 and 806, by either the analytics component 134 or the event reporting controller 136. The event reporting controller 136, in step 808, then determines the minimum number of subscriber to be monitored for achieving the required KPI precision per dimension and generates associated event reporting requests for the NFs 140 as needed. The objective of determining a proper event sampling rate at the NFs 140 in the RAN domain 120 is to collect enough and about the same amount of events for each cell. KPI precision values are reported per cell to the analytics component 134 by the event reporting controller 136. The sampling/filtering rate is/are adjusted (increased/decreased) at the RAN NF(s) 140. Based on the correlation of information obtained in the NM domain 130, the user and control plane events are obtained for the same subscribers for the RAN NFs 140 as for the CN NFs 140. Depending on the available event reporting capabilities at the different NFs 140 (see steps 810, 812), representative sampling can be reached with the proper combination of sampling and filtering, especially in a cross-domain analytics scenario. In this manner coherent event filter settings can be achieved across the NFs 140.

In one example, sufficient samples for the UP KPIs and related KPIs in the RAN domain 120 are needed to check if a service quality issue is due to radio problems or not. So UP and RAN KPIs are needed for the same sessions. It is assume here that both CN domain NFs 140 and RAN domain NFs 140 support random sampling. In certain cells the data volume is much more than needed for the required KPI precision, therefore, in these cells one could apply 10% random sampling for the RAN domain 120. But in the CN domain 110 the UP report for the same sessions is needed. So the event reporting controller 136 identifies who are the subscribers for which RAN events are collected and adds these subscribers to the white list of the CN NFs 140. In this way, one collects events at a rate of 10% in the CN domain 110 as well.

A default sampling rate may initially be set for event collection (e.g., as a kind of bootstrapping/self-starting mechanism), see step 814. Note that step 804 already needs the number of actually collected event records broken down by dimension values and the applied sampling rate. From these pieces of information, it is possible to estimate the true number of subscribers broken down by dimension values. This is then used in step 808.

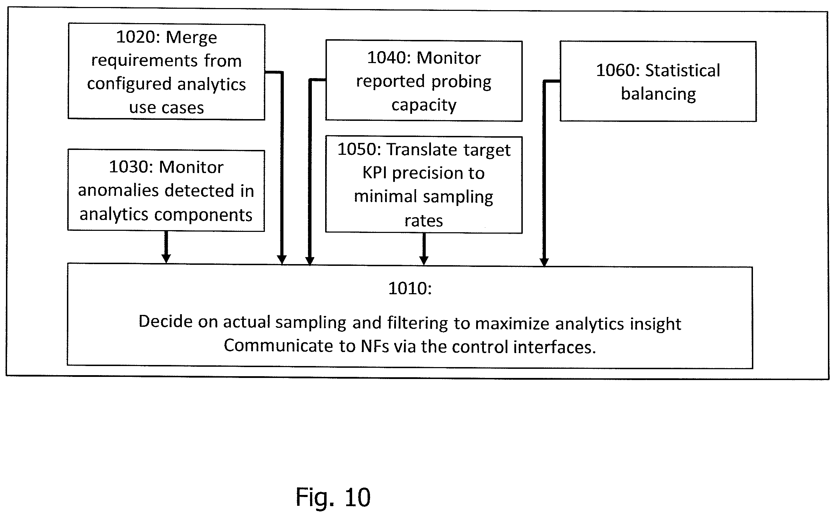

Fig. 10 summarizes the operations of the event reporting controller 136 as discussed above with reference to various examples. As a core task, the event reporting controller decides on current NF event reporting settings, such as actual sampling and filtering settings, and communicates those settings to the NFs 140 via dedicated control interfaces (see block 1010). To this end, the controller 136 merges requirements of different UCs as needed (block 1020), and continuously monitors network anomalies reported by the analytics components 134 (block 1030) and monitoring capacities reported by the NFs 140 (block 1040). The controller 136 is also capable of translating target KPI precision requirements into sampling rates (block 1050), and of performing statistical balancing, for example between different network domains, (block 1060)

Adding an extra event reporting control layer between the analytics components 134 on the one hand and the CN and RAN domains 110, 120 on the other offers significant advantages. For example, the burden of integrating sampling and filtering control of multiple NF types from multiple vendors is removed, or decoupled, from development and maintenance of the analytics components 134.

Moreover, in the embodiments described above, the event monitoring and reporting "footprint" of the NM domain 130 in the CN domain 110 and RAN domain 120 can be reduced and controlled, which is desirable in particular with the advent of 5G networks and the expected increase of devices, cells and service types. At the same time, the value and flexibility of a legacy-type "full" monitoring and reporting can be maintained.

The event reporting control layer can specifically be implemented using, for example, dynamic event filter settings and dynamic event sampling rates. If, for example, event monitoring and reporting is only required for a particular subscriber set or a particular type of user terminal, this requirement can easily be implemented while keeping the event load low on the side of the NW domain 130. At the same time, KPI precision (i.e., analysis accuracy) can be controlled as needed. Moreover, prevailing loads and capacities in the CN domain 110 and RAN domain 120 can be taken into account when it comes to event monitoring and reporting. As such, monitoring and reporting can flexibly be distributed among NFs 140 and domains 110, 120. For example, cross-domain load balancing becomes possible. The user plane probing load can be reduced in a consistent way while making sure that communication sessions specifically required for particular analytics UCs are still encompassed.

## Claims

1. A method (300, 400, 500, 600, 700) of controlling reporting of network events by one or more network functions, NF, (140) of a wireless communication network (110, 120), the method comprising:
receiving (302), from at least one network analytics component (134), a network analytics request indicative of at least one event reporting requirement of the at least one network analytics component (134);
receiving (304), from at least one NF (140), multiple NF reports indicative of an event reporting capability and at least one of a load and a capacity of the at least one NF (140);
generating (306) an event reporting request based on the at least one event reporting requirement and at least one of the event reporting capability, the load, and the capacity of the at least one NF (140); and
sending (308) the event reporting request to the at least one NF (140) so as to control event reporting by that at least one NF (140),
wherein a first NF report of the multiple NF reports is indicative of the event reporting capability of that particular NF (140) and a second NF report of the multiple NF reports is indicative of at least one of the load and the capacity of that particular NF (140), and
the second NF report is received repeatedly after the event reporting request has been sent to the particular NF (140).

2. The method of claim 1, comprising
receiving multiple network analytics requests that are collectively indicative of multiple event reporting requirements; and
merging the multiple event reporting requirements into an overall event reporting requirement for the at least one NF (140), wherein the event reporting request sent to the at least one NF (140) is based on the overall event reporting requirement.

3. The method of claim 2, wherein:
- at least two of the multiple event reporting requirements are received from different network analytics components (134); and/or
- at least two of the multiple event reporting requirements comprise a numerical value; and wherein merging the multiple event reporting requirements comprises deriving, from the numerical values comprised in the at least two of the multiple event reporting requirements, an overall numerical value to be comprised by the overall reporting requirement.

4. The method of any of the preceding claims, wherein:
- multiple NF reports are received from multiple NFs (140), and wherein the event reporting request for a particular one of the multiple NFs (140) is individualized based on at least one of the event reporting capability, the load and the capacity of that particular NF; and/or
- the second NF report is further indicative of current event reporting settings of the particular NF (140); and/or
- the one or more NFs (140) are implemented using cloud computing resources; and wherein
an amount of cloud computing resources allocated to a particular NF (140) is dependent on the event reporting request sent to that particular NF.
- the method comprises determining if the network analytics request from the at least one network analytics component (134) can be fulfilled in view of at least one of the event reporting capability, the load and the capacity of the at least one NF (140); and sending, to the at least network analytics component (134), a network analytics response message indicative of a result of the determination; and/or
- multiple NFs (140) are provided in different network domains (110, 120) of the wireless communication network, the different network domains comprising at least a radio access network domain (120) and a core network domain (110); and wherein multiple NF reports are received from, and multiple event reporting requests are sent to, NFs (140) provided in the different network domains (110, 120).

5. The method of any of the preceding claims, wherein
the event reporting request is indicative of at least one of:
- an event sampling rate to be applied by the at least one NF (140);
- an event filter setting to be applied by the at least one NF (140); and
- one or more key performance indicators, KPIs, for which event reporting is to be performed by the at least one NF (140).

6. The method (500, 700) of claim 5, wherein:
- the event reporting requirement is indicative of at least one KPI and an associated precision requirement; and comprising calculating the event sampling rate based on the precision requirement, wherein the event reporting request is indicative of at least the calculated event sampling rate and the at least one KPI; and/or
- the event reporting request is indicative of at least the event sampling rate; and comprising sending, to the at least one network analytics component (134), a message indicative of the event sampling rate or a parameter derived therefrom; and/or
- the event filter setting is indicative of one or more of a set of one or more network subscribers to be covered by NF event reporting, a wireless device class or type to be covered by NF event reporting and a geographic area to be covered by NF event reporting.

7. The method of claim 5 or 6, wherein
the NF report from the at least one NF (140) is indicative of an NF event reporting capability in terms of an event filter supported by the at least one NF (140); and wherein
generating the event reporting request for the at least one NF (140) comprises processing the network reporting requirement to result in an event filter setting compatible with the event filter supported by the at least one NF (140).

8. The method of claim 7, wherein
multiple NF reports are received from multiple NF (140), wherein the multiple reports are indicative of different event filters supported by different NFs (140); and wherein
generating the event reporting requests for the NFs (140) comprises processing the network reporting requirements to result in coherent event filter settings compatible with the different events filters supported by the different NFs (140), wherein, as an option, the processing targets at controlling event reporting by the multiple NFs (140) such that the multiple NFs (140) are configured to report events pertaining to a particular communication session despite their different event filters.

9. The method of any one of the preceding claims, comprising
sending an NF capability request to the particular NF (140), wherein the first NF report is received responsive to the NF capability request,
wherein, optionally, sending the NF capability request is triggered by receipt of the network analytics request.

10. The method of any of the preceding claims, comprising
receiving, from the at least one network analytics component (134), analytics information derived from the NF event reporting;
generating a further event reporting request based on at least the analytics information; and
sending the further event reporting request to the at least one NF so as to modify event reporting by that at least one NF.

11. The method (600) of claim 10, wherein:
- the analytics information is indicative of at least one of a network anomaly, a number of events reported by a particular NF (140), optionally for a particular key performance indicator, KPI, and a mapping of identifiers used in different network domains; and/or
- the further event reporting request is generated also based on at least one of the event reporting capability, the load and the capacity of the at least one NF (140); and/or
- in combination with at least claim 5, the further event reporting request controls a modification of at least one of a currently applied event sampling rate, a currently monitored KPI set, a currently reporting set of NFs (140) and a currently applied event filter setting.

12. The method of any of the preceding claims, wherein
the method is performed by an event reporting control component (136) having a first interface (136A) towards the at least one network analytics component (134) and a second interface (136B) towards the at least one NF (140).

13. The method of claim 12, wherein
the event reporting control component (136) is co-located with the at least one network analytics component (134) in a network management domain (130),
wherein, optionally, the network management domain (130) further comprises an event collection component (132) having a third interface (132A) towards the at least one network analytics component (134) and a fourth interface (132B) towards the at least one NF (140) for receiving event reports from the at least one NF (140).

14. A computer program product comprising program code portions for performing the steps of any of claim 1 to 13 when the computer program product is executed by a processor (202) or set of processors.

15. An apparatus (136) for controlling reporting of network events by one or more network functions, NF, (140) of a wireless communication network (110, 120), the apparatus (136) being configured to perform the method (300, 400, 500, 600, 700) of any of claims 1 to 13.

## Patentansprüche

1. Verfahren (300, 400, 500, 600, 700) zur Steuerung der Meldung von Netzwerkereignissen durch eine oder mehrere Netzwerkfunktionen, NF, (140) eines drahtlosen Kommunikationsnetzwerks (110, 120), wobei das Verfahren Folgendes umfasst:
Empfangen (302) einer Netzwerkanalyseanfrage, die mindestens eine Ereignismeldungsanforderung mindestens einer Netzwerkanalysekomponente (134) angibt, von der mindestens einen Netzwerkanalysekomponente (134);
Empfangen (304) mehrerer NF-Meldungen, die eine Ereignismeldungsfähigkeit und mindestens eine von einer Last und einer Kapazität mindestens einer NF (140) angeben, von der mindestens einen NF (140);
Generieren (306) einer Ereignismeldungsanfrage basierend auf der mindestens einen Ereignismeldungsanforderung und mindestens einer von der Ereignismeldungsfähigkeit, der Last und der Kapazität der mindestens einen NF (140); und
Senden (308) der Ereignismeldungsanfrage an die mindestens eine NF (140), um Ereignismeldung durch diese mindestens eine NF (140) zu steuern;
wobei eine erste NF-Meldung der mehreren NF-Meldungen die Ereignismeldungsfähigkeit dieser spezifischen NF (140) angibt und eine zweite NF-Meldung der mehreren NF-Meldungen mindestens eine von der Last und der Kapazität dieser spezifischen NF (140) angibt, und
die zweite NF-Meldung nach dem Senden der Ereignismeldungsanfrage an die spezifische NF (140) wiederholt empfangen wird.

2. Verfahren nach Anspruch 1, umfassend:
Empfangen mehrerer Netzwerkanalyseanfragen, die zusammen mehrere Ereignismeldungsanforderungen angeben; und
Zusammenführen der mehreren Ereignismeldungsanforderungen zu einer Gesamtereignismeldungsanforderung für die mindestens eine NF (140), wobei die an die mindestens eine NF (140) gesendete Ereignismeldungsanfrage auf der Gesamtereignismeldungsanforderung basiert.

3. Verfahren nach Anspruch 2, wobei:
- mindestens zwei der mehreren Ereignismeldungsanforderungen von verschiedenen Netzwerkanalysekomponenten (134) empfangen werden; und/oder
- mindestens zwei der mehreren Ereignismeldungsanforderungen einen numerischen Wert umfassen; und wobei das Zusammenführen der mehreren Ereignismeldungsanforderungen Ableiten eines numerischen Gesamtwerts, der in der Gesamtmeldungsanforderung umfasst sein soll, von den in den mindestens zwei der mehreren Ereignismeldungsanforderungen umfassten numerischen Werten umfasst.

4. Verfahren nach einem der vorhergehenden Ansprüche, wobei:
- mehrere NF-Meldungen von mehreren NFs (140) empfangen werden, und wobei die Ereignismeldungsanfrage für eine spezifische der mehreren NFs (140) basierend auf mindestens einer von der Ereignismeldungsfähigkeit, der Last und der Kapazität dieser spezifischen NF individualisiert wird; und/oder
- die zweite NF-Meldung ferner aktuelle Ereignismeldungseinstellungen der spezifischen NF (140) angibt; und/oder
- die eine oder die mehreren NFs (140) unter Verwendung von Cloud-Computing-Ressourcen implementiert sind; und wobei
eine Menge von Cloud-Computing-Ressourcen, die einer spezifischen NF (140) zugewiesen werden, von der an diese spezifische NF gesendeten Ereignismeldungsanfrage abhängt,
- das Verfahren Bestimmen, ob die Netzwerkanalyseanfrage von der mindestens einen Netzwerkanalysekomponente (134) in Anbetracht mindestens einer von der Ereignismeldungsfähigkeit, der Last und der Kapazität der mindestens einen NF (140) erfüllt werden kann, und Senden einer Netzwerkanalyseantwortnachricht, die ein Ergebnis der Bestimmung angibt, an die mindestens eine Netzwerkanalysekomponente (134) umfasst; und/oder
- mehrere NFs (140) in verschiedenen Netzwerkdomänen (110, 120) des drahtlosen Kommunikationsnetzwerks bereitgestellt sind, wobei die verschiedenen Netzwerkdomänen mindestens eine Funkzugangsnetzwerkdomäne (120) und eine Kernnetzwerkdomäne (110) umfassen; und wobei mehrere NF-Meldungen empfangen werden von und mehrere Ereignismeldungsanfragen gesendet werden an NFs (140), die in den verschiedenen Netzwerkdomänen (110, 120) bereitgestellt sind.

5. Verfahren nach einem der vorhergehenden Ansprüche, wobei
die Ereignismeldungsanfrage mindestens eines von Folgendem angibt:
- eine Ereignisabtastrate, die von der mindestens einen NF (140) angewendet werden soll;
- eine Ereignisfiltereinstellung, die von der mindestens einen NF (140) angewendet werden soll; und
- einen oder mehrere Hauptleistungsindikatoren, KPIs, für die eine Ereignismeldung von der mindestens einen NF (140) durchgeführt werden soll.

6. Verfahren (500, 700) nach Anspruch 5, wobei:
- die Ereignismeldungsanforderung mindestens einen KPI und eine zugehörige Genauigkeitsanforderung angibt; und umfassend Berechnen der Ereignisabtastrate basierend auf der Genauigkeitsanforderung, wobei die Ereignismeldungsanfrage mindestens die berechnete Ereignisabtastrate und den mindestens einen KPI angibt; und/oder
- die Ereignismeldungsanfrage mindestens die Ereignisabtastrate angibt; und umfassend Senden einer Nachricht, die die Ereignisabtastrate oder einen davon abgeleiteten Parameter angibt, an die mindestens eine Netzwerkanalysekomponente (134); und/oder
- die Ereignisfiltereinstellung eines oder mehrere von einem Satz eines oder mehrerer Netzwerkteilnehmer, die durch NF-Ereignismeldung abgedeckt werden sollen, einer Klasse oder Art von drahtlosen Vorrichtungen, die durch NF-Ereignismeldung abgedeckt werden soll, und einem geografischen Gebiet angibt, das durch NF-Ereignismeldung abgedeckt werden soll.

7. Verfahren nach Anspruch 5 oder 6, wobei
die NF-Meldung von der mindestens einen NF (140) eine NF-Ereignismeldungsfähigkeit in Form eines Ereignisfilters angibt, der von der mindestens einen NF (140) unterstützt wird; und wobei
das Generieren der Ereignismeldungsanfrage für die mindestens eine NF (140) Verarbeiten der Netzwerkmeldungsanforderung umfasst, um eine Ereignisfiltereinstellung zu ergeben, die mit dem von der mindestens einen NF (140) unterstützten Ereignisfilter kompatibel ist.

8. Verfahren nach Anspruch 7, wobei
mehrere NF-Meldungen von mehreren NFs (140) empfangen werden, wobei die mehreren Meldungen verschiedene Ereignisfilter angeben, die von verschiedenen NFs (140) unterstützt werden; und wobei
das Generieren der Ereignismeldungsanfragen für die NFs (140) Verarbeiten der Netzwerkmeldungsanforderungen umfasst, um kohärente Ereignisfiltereinstellungen zu ergeben, die mit den verschiedenen Ereignisfiltern kompatibel sind, die von den verschiedenen NFs (140) unterstützt werden, wobei als eine Option das Verarbeiten darauf abzielt, Ereignismeldung durch die mehreren NFs (140) so zu steuern, dass die mehreren NFs (140) dazu konfiguriert sind, Ereignisse, die eine spezifische Kommunikationssitzung betreffen, ungeachtet ihrer verschiedenen Ereignisfilter zu melden.

9. Verfahren nach einem der vorstehenden Ansprüche, umfassend
Senden einer NF-Fähigkeitsanfrage an die spezifische NF (140), wobei die erste NF-Meldung in Reaktion auf die NF-Fähigkeitsanfrage empfangen wird,
wobei optional das Senden der NF-Fähigkeitsanfrage durch den Empfang der Netzwerkanalyseanfrage ausgelöst wird.

10. Verfahren nach einem der vorhergehenden Ansprüche, umfassend
Empfangen von der NF-Ereignismeldung abgeleiteter Analyseinformationen von der mindestens einen Netzwerkanalysekomponente (134);
Generieren einer weiteren Ereignismeldungsanfrage zumindest basierend auf den Analyseinformationen; und Senden der weiteren Ereignismeldungsanfrage an die mindestens eine NF, um Ereignismeldung durch diese mindestens eine NF zu modifizieren.

11. Verfahren (600) nach Anspruch 10, wobei:
- die Analyseinformationen mindestens eines von einer Netzwerkanomalie, einer Anzahl von Ereignissen, die von einer spezifischen NF (140) gemeldet werden, optional für einen spezifischen Hauptleistungsindikator, KPI, und einer Zuordnung von Kennungen angeben, die in verschiedenen Netzwerkdomänen verwendet werden; und/oder
- die weitere Ereignismeldungsanfrage außerdem auf mindestens einem von der Ereignismeldungsfähigkeit, der Last und der Kapazität der mindestens einen NF (140) basiert; und/oder
- in Kombination zumindest mit Anspruch 5 die weitere Ereignismeldungsanfrage eine Modifizierung von mindestens einem von einer gegenwärtig angewendeten Ereignisabtastrate, einem gegenwärtig überwachten KPI-Satz, einem gegenwärtig meldenden Satz von NFs (140) und einer gegenwärtig angewendeten Ereignisfiltereinstellung steuert.

12. Verfahren nach einem der vorhergehenden Ansprüche, wobei
das Verfahren von einer Ereignismeldungssteuerkomponente (136) mit einer ersten Schnittstelle (136A) zu der mindestens einen Netzwerkanalysekomponente (134) und einer zweiten Schnittstelle (136B) zu der mindestens einen NF (140) durchgeführt wird.

13. Verfahren nach Anspruch 12, wobei
die Ereignismeldungssteuerkomponente (136) mit der mindestens einen Netzwerkanalysekomponente (134) ortsgleich in einer Netzwerkverwaltungsdomäne (130) angeordnet ist,
wobei optional die Netzwerkverwaltungsdomäne (130) ferner eine Ereigniserfassungskomponente (132) mit einer dritten Schnittstelle (132A) zu der mindestens einen Netzwerkanalysekomponente (134) und einer vierten Schnittstelle (132B) zu der mindestens einen NF (140) zum Empfangen von Ereignismeldungen von der mindestens einen NF (140) umfasst.

14. Computerprogrammprodukt, umfassend Programmcodeabschnitte zum Ausführen der Schritte nach einem der Ansprüche 1 bis 13, wenn das Computerprogrammprodukt von einem Prozessor (202) oder einem Satz von Prozessoren ausgeführt wird.

15. Einrichtung (136) zum Steuern der Meldung von Netzwerkereignissen durch eine oder mehrere Netzwerkfunktionen, NF, (140) eines drahtlosen Kommunikationsnetzwerks (110, 120), wobei die Einrichtung (136) zum Durchführen des Verfahrens (300, 400, 500, 600, 700) nach einem der Ansprüche 1 bis 13 ausgelegt ist.

## Revendications

1. Procédé (300, 400, 500, 600, 700) de commande de rapport d'événements de réseau par une ou plusieurs fonctions de réseau, NF, (140) d'un réseau de communication sans fil (110, 120), le procédé comprenant :
la réception (302), depuis au moins un composant d'analyse de réseau (134), d'une demande d'analyse de réseau indiquant au moins une exigence de rapport d'événements de l'au moins un composant d'analyse de réseau (134) ;
la réception (304), depuis au moins une NF (140), de multiples rapports NF indiquant une capacité de rapport d'événements et au moins l'une parmi une charge et une capacité de l'au moins une NF (140) ;
la génération (306) d'une demande de rapport d'événements sur la base de l'au moins une exigence de rapport d'événements et d'au moins l'une parmi la capacité de rapport d'événements, la charge et la capacité de l'au moins une NF (140) ; et
l'envoi (308) de la demande de rapport d'événements à l'au moins une NF (140) de manière à commander un rapport d'événements par cette au moins une NF (140),
dans lequel un premier rapport NF parmi les multiples rapports NF indique la capacité de rapport d'événements de cette NF (140) particulière et un deuxième rapport NF parmi les multiples rapports NF indique au moins l'une parmi la charge et la capacité de cette NF (140) particulière, et
le deuxième rapport NF est reçu de manière répétée après l'envoi de la demande de rapport d'événements à la NF (140) particulière.

2. Procédé selon la revendication 1, comprenant :
la réception de multiples demandes d'analyse de réseau qui indiquent collectivement de multiples exigences de rapport d'événements ; et
la fusion des multiples exigences de rapport d'événements dans une exigence de rapport d'événements globale pour l'au moins une NF (140), dans lequel la demande de rapport d'événements envoyée à l'au moins une NF (140) est sur la base de l'exigence de rapport d'événements globale.

3. Procédé selon la revendication 2, dans lequel :
- au moins deux parmi les multiples exigences de rapport d'événements sont reçues depuis différents composants d'analyse de réseau (134) ; et/ou
- au moins deux parmi les multiples exigences de rapport d'événements comprennent une valeur numérique ; et dans lequel la fusion des multiples exigences de rapport d'événements comprend la déduction, à partir des valeurs numériques comprises dans les au moins deux parmi les multiples exigences de rapport d'événements, d'une valeur numérique globale qui doit être comprise dans l'exigence de rapport globale.

4. Procédé selon l'une quelconque des revendications précédentes, dans lequel :
- de multiples rapports NF sont reçus depuis de multiples NF (140) et dans lequel la demande de rapport d'événements pour l'une particulière parmi les multiples NF (140) est individualisée sur la base d'au moins l'une parmi la capacité de rapport d'événements, la charge et la capacité de cette NF particulière ; et/ou
- le deuxième rapport NF indique en outre des réglages de rapport d'événements actuels de la NF (140) particulière ; et/ou
- les une ou plusieurs NF (140) sont mises en œuvre à l'aide de ressources d'informatique en nuage ; et dans lequel une quantité de ressources d'informatique en nuage allouées à une NF (140) particulière dépend de la demande de rapport d'événements envoyée à cette NF particulière ;
- le procédé comprend la détermination si la demande d'analyse de réseau émanant de l'au moins un composant d'analyse de réseau (134) peut être remplie compte tenu d'au moins l'une parmi la capacité de rapport d'événements, la charge et la capacité de l'au moins une NF (140) ; et l'envoi, à l'au moins un composant d'analyse de réseau (134), d'un message de réponse d'analyse de réseau indiquant un résultat de la détermination ; et/ou
- de multiples NF (140) sont fournies dans différents domaines de réseau (110, 120) du réseau de communication sans fil, les différents domaines de réseau comprenant au moins un domaine de réseau d'accès radio (120) et un domaine de réseau central (110) ; et dans lequel de multiples rapports NF sont reçus depuis, et de multiples demandes de rapport d'événements sont envoyées à, des NF (140) fournies dans les différents domaines de réseau (110, 120).

5. Procédé selon l'une quelconque des revendications précédentes, dans lequel
la demande de rapport d'événements indique au moins l'un parmi :
- un taux d'échantillonnage d'événements à appliquer par l'au moins une NF (140) ;
- un réglage de filtre d'événements à appliquer par l'au moins une NF (140) ; et
- un ou plusieurs indicateurs clés de performance, KPI, pour lesquels un rapport d'événements doit être réalisé par l'au moins une NF (140).

6. Procédé (500, 700) selon la revendication 5, dans lequel :
- l'exigence de rapport d'événements indique au moins un KPI et une exigence de précision associée ; et comprenant le calcul du taux d'échantillonnage d'événements sur la base de l'exigence de précision, dans lequel la demande de rapport d'événements indique au moins le taux d'échantillonnage d'événements calculé et l'au moins un KPI ; et/ou
- la demande de rapport d'événements indique au moins le taux d'échantillonnage d'événements ; et comprenant l'envoi, à l'au moins un composant d'analyse de réseau (134), d'un message indiquant le taux d'échantillonnage d'événements ou un paramètre déduit de celui-ci ; et/ou
- le réglage de filtre d'événements indique un ou plusieurs parmi un ensemble d'un ou plusieurs abonnés de réseau à couvrir par le rapport d'événements NF, une catégorie ou un type de dispositif sans fil à couvrir par le rapport d'événements NF et une zone géographique à couvrir par le rapport d'événements NF.

7. Procédé selon la revendication 5 ou 6, dans lequel
le rapport NF émanant de l'au moins une NF (140) indique une capacité de rapport d'événements NF en termes de filtre d'événements pris en charge par l'au moins une NF (140) ; et dans lequel
la génération de la demande de rapport d'événements pour l'au moins une NF (140) comprend le traitement de l'exigence de rapport de réseau pour donner un réglage de filtre d'événements compatible avec le filtre d'événements pris en charge par l'au moins une NF (140).

8. Procédé selon la revendication 7, dans lequel
de multiples rapports NF sont reçus depuis de multiples NF (140), dans lequel les multiples rapports indiquent différents filtres d'événements pris en charge par différentes NF (140) ; et dans lequel
la génération des demandes de rapport d'événements pour les NF (140) comprend le traitement des exigences de rapport de réseau pour donner des réglages de filtre d'événements cohérents compatibles avec les différents filtres d'événements pris en charge par les différentes NF (140), dans lequel, facultativement, le traitement vise à commander le rapport d'événements par les multiples NF (140) de sorte que les multiples NF (140) soient configurées pour rapporter des événements concernant une session de communication particulière nonobstant leurs filtres d'événements différents.

9. Procédé selon l'une quelconque des revendications précédentes, comprenant :
l'envoi d'une demande de capacité NF à la NF (140) particulière, dans lequel le premier rapport NF est reçu en réponse à la demande de capacité NF,
dans lequel, facultativement, l'envoi de la demande de capacité NF est déclenché par la réception de la demande d'analyse de réseau.

10. Procédé selon l'une quelconque des revendications précédentes, comprenant :
la réception, depuis l'au moins un composant d'analyse de réseau (134), d'informations d'analyse déduites du rapport d'événements NF ;
la génération d'une autre demande de rapport d'événements sur la base au moins des informations d'analyse ; et
l'envoi de l'autre demande de rapport d'événements à l'au moins une NF de manière à modifier le rapport d'événements par cette au moins une NF.

11. Procédé (600) selon la revendication 10, dans lequel :
- les informations d'analyse indiquent au moins l'un parmi une anomalie de réseau, un nombre d'événements rapportés par une NF (140) particulière, facultativement pour un indicateur clé de performance particulier, KPI, et un mappage d'identifiants utilisés dans différents domaines de réseau ; et/ou
- l'autre demande de rapport d'événements est générée également sur la base d'au moins l'une parmi la capacité de rapport d'événements, la charge et la capacité de l'au moins une NF (140) ; et/ou
- en combinaison avec au moins la revendication 5, l'autre demande de rapport d'événements commande une modification d'au moins l'un parmi un taux d'échantillonnage d'événements actuellement appliqué, un ensemble de KPI actuellement surveillés, un ensemble de NF (140) rapportant actuellement et un réglage de filtre d'événements actuellement appliqué.

12. Procédé selon l'une quelconque des revendications précédentes, dans lequel
le procédé est réalisé par un composant de commande de rapport d'événements (136) comportant une première interface (136A) avec l'au moins un composant d'analyse de réseau (134) et une deuxième interface (136B) avec l'au moins une NF (140).

13. Procédé selon la revendication 12, dans lequel
le composant de commande de rapport d'événements (136) est colocalisé avec l'au moins un composant d'analyse de réseau (134) dans un domaine de gestion de réseau (130),
dans lequel, facultativement, le domaine de gestion de réseau (130) comprend en outre un composant de collecte d'événements (132) comportant une troisième interface (132A) avec l'au moins un composant d'analyse de réseau (134) et une quatrième interface (132B) avec l'au moins une NF (140) pour recevoir des rapports d'événements depuis l'au moins une NF (140).

14. Produit de programme informatique comprenant des parties de code de programme pour réaliser les étapes selon l'une quelconque des revendications 1 à 13 lorsque le produit de programme informatique est exécuté par un processeur (202) ou un ensemble de processeurs.

15. Appareil (136) pour commander un rapport d'événements de réseau par une ou plusieurs fonctions de réseau, NF, (140) d'un réseau de communication sans fil (110, 120), l'appareil (136) étant configuré pour réaliser le procédé (300, 400, 500, 600, 700) selon l'une quelconque des revendications 1 à 13.
